# EUROPÄISCHE PATENTSCHRIFT

(11) **EP 0 981 079 B1**
(45) Veröffentlichungstag und Bekanntmachung des Hinweises auf die Patenterteilung: **22.08.2007**
(21) Anmeldenummer: 99202593.2
(22) Anmeldetag: 09.08.1999
(51) Int. Cl.: G06F 5/06

(54) **Programmierbare 1-Bit Datenverarbeitungsanordnung**
Programmable one bit data processing apparatus
Dispositif de traitement de données à un bit programmable

(30) Priorität: 17.08.1998 DE 19837101
(43) Veröffentlichungstag der Anmeldung: 23.02.2000
(73) Patentinhaber: NXP B.V., 5656 AG Eindhoven (NL)
(72) Erfinder: Mayer-Lindenberg, Georg-Friedrich, Prof. Dr., Röntgenstrasse 24, 22335 Hamburg (DE)
(74) Vertreter: Röggla, Harald

(56) Entgegenhaltungen:
- EP-A- 0 256 134
- EP-A- 0 428 326
- DE-A1- 3 049 437
- DE-A1- 3 824 306
- GB-A- 1 448 041
- US-A- 5 651 123
- SERNEC R ET AL: "Multithreaded systolic/SIMD DSP array processor-MUS2DAP" SIGNAL PROCESSING SYSTEMS, 1997. SIPS 97 - DESIGN AND IMPLEMENTATION., 1997 IEEE WORKSHOP ON LEICESTER, UK 3-5 NOV. 1997, NEW YORK, NY, USA,IEEE, US, 3. November 1997 (1997-11-03), Seiten 448-457, XP010249805 ISBN: 0-7803-3806-5

## Beschreibung

Die Erfindung betrifft eine programmierbare 1-Bit Datenverarbeitungsanordnung mit auf einer 1-Bit Verbindungsstruktur basierenden ALU und einem Datenspeicher, der als ringförmig geschaltetes Schieberegister mit einer Wortbreite von 1 Bit realisiert ist, wobei Daten seriell aus Datenausgängen durch unidirektionale Schiebevorgänge der ALU zuführbar sind und die ALU Daten seriell über einen gemeinsamen Dateneingang dem Datenspeicher zuführt, und bezieht sich auf das Problem, eine einfache, programmierbare Logik bereitzustellen, die geringe Anforderungen an Datenverarbeitungsbreite und Geschwindigkeit stellt, wobei eine minimale Gatter-Anzahl durch Reduzierung auf die notwendigsten Erfordernisse an eine universell programmierbare Struktur erreicht wird.

Es sind 1-Chip- Realisierungen bekannt, die eine Verarbeitungsbreite von 1 Bit haben. Dabei werden jedoch Strukturen verwendet, die intern eine Struktur für höhere Verarbeitungsbreiten aufweisen.

In der DE 38 24 306 A1 wird ein Rechenwerk beschrieben, bei dem der Datenbus eine Breite von mindestens, aber vorzugsweise 1 Bit hat und bei dem Instruktionen und Daten seriell über Schieberegister zwischen Datenspeicher und internem Datenbus des Mikroprozessors übermittelt werden, wodurch die einzelnen Datenketten unterschiedliche Längen haben. Über eine zweite Leitung wird die Länge der zu übermittelnden Datenkette angegeben. Bei dieser Rechnerstruktur sind die Register und auch das Rechenwerk auf ein Vielfaches der Datenbusbreite ausgelegt. Hier wird die Speicherung der Daten wie in komplexeren Strukturen in einem RAM vorgenommen. Die Darstellung der Daten auf einer Breite von 1 Bit erfolgt nur für die Datenübertragung zwischen dem RAM und dem internen Datenbus des Prozessors, wobei hier ein Schieberegister zur Übermittlung benutzt wird.

In der GB 1 448 041 wird ein 1-Bit-Digitalcomputer beschrieben. Die Daten werden der ALU über Datenbusse mit einer Breite von 1 Bit zugeführt. Die Eingangsdaten werden einem Register parallel zugeführt und die Ausgangsdaten parallel von einem Ausgangsregister abgegeben. Der Dekoder greift über Adressen auf diese Register zu und leitet die Daten sequentiell zum RAM oder einem mit der ALU verbundenen Arbeitsregister weiter. Es wird ein Stack mit vier Positionen als Arbeitsregister verwendet, der als bidirektionales Schieberegister realisiert ist. Hier wird ein einfacher Sequenzer eingesetzt, der ein feste Befehlsfolge zyklisch ausliest. Dieser Prozessor nutzt zusätzlich zu dem Arbeitsregister einen RAM, um Zwischenergebnisse zu speichern.

In der EP 0 428 326 A1 wird ein Prozessor-Array-System beschrieben, bei dem jede ALU Daten vom Datenspeicher über eine Multiplexer empfängt und über einen Multiplexer zum Datenspeicher ausgibt. Jede einzelne ALU dieses Array-Systems enthält ein Akkumulatorregister und ein Carry-Register, die für die ALU Daten bereitstellen. Der Eingang zur ALU vom Akkumulatorregister wird mit einem Eingang von einem Schieberegister gemultiplext. Dieses unidirektionale Schieberegister hat eine festgelegte Länge von 32 Bit. Es enthält vier Datenoutputs, die alle 8 Bit auseinander liegen. Einer dieser vier Ausgänge wird selektiert und über den Multiplexer mit der ALU verbunden. Das niederwertigste Bit des Schieberegisters ist mit seinem höchstwertigsten Bit verbunden. Bei bitweisen Schiebeoperationen wird jeweils ein Bit diese Schieberegisters als Operand für die ALU verwendet. Bei Multiplikationen liefert das Schieberegister den Operanden und erhält gleichzeitig das Ergebnis der Multiplikation am gemeinsamen Dateneingang.

Die EP 0 256 134 A1 offenbart eine CPU mit einem internen Datenbus, einer ALU und einer Mehrzahl von Registern. Die Mehrzahl von Registern und weitere Register bestehen aus Paaren von Registern.

Die US 5,651,123 offenbart eine Vorrichtung zum Steuern einer Programmausführung und in R. Sernec et. al., "Multithread Systolic/SIMD DSP Array Processor - MUS2DAP", 1997 IEEE Workshop on Signal Processing Systems Sips 97: Design and Implementation, Seiten 448-457 ist ein Multithread Prozessor offenbart. Jedem Thread sind Register zugeordnet. Alternativ kann auch ein einziges Register vorhanden sein. Dieses ist partioniert, wobei einige der Partitionen einem der Threads und weitere Partitionen einem anderen Thread zugeordnet sind.

Für viele Anwendungsfälle ist es nicht erforderlich, eine hohe Verarbeitungsbreite bereitzustellen, da die anfallenden Daten nicht sehr schnell verarbeitet werden müssen oder durch den äußeren Prozess nur so wenig Daten anfallen, daß sie auch seriell bei voller Funktionalität verarbeitet werden können. Bisher wurden für diese Anwendungsfälle entweder überdimensionierte Chip-Strukturen mit höherem Leistungsumfang eingesetzt, oder es wurde auf verdrahtete Logik zurückgegriffen, die wiederum nicht programmierbar ist.

Auf dem Gebiet der Smart-Cards gibt es jedoch eine Reihe von Anwendungsfällen, bei denen der Datendurchsatz nicht sehr hoch ist. Zudem ist die Schnittstellenbreite zur Außenwelt durch die Normung der Kontaktschnittstelle ISO 7816-3 auf 1 Bit festgelegt.

Aufgabe der Erfindung ist es deshalb, eine programmierbare Struktur anzugeben, die mit einer Verarbeitungsbreit von 1 Bit arbeitet und auf geringster Fläche eine programmierbare Struktur zur Verfügung stellt, die einfachen Anforderungen, wie Kommunikation und Verarbeitung von Daten gerecht wird.

Diese Aufgabe wird erfindungsgemäß dadurch gelöst, daß das Schieberegister partitionierbar ist und eine durch Selektion einmal ausgewählte aktive Partition so lange aktiv ist, bis ein Befehl eine andere Partition aktiviert, und daß Daten vom Datenausgang am Partitionsende der aktiven Partition der ALU zuführbar sind und Daten von der ALU zum Dateneingang der aktiven Partition am Partitionsanfang zuführbar sind, ohne dass die restlichen Partitionen des Schieberegisters verschoben oder verändert werden.

Für die programmierbare Struktur mit einer Verarbeitungsbreite von 1 Bit macht die Erfindung von der Überlegung Gebrauch, daß für Smart-Cards und Identifikationssysteme die Kommunikationsschnittstelle nach ISO 7816-3 genormt ist, in der die 1-Bit-Datenbreite festgeschrieben ist, und daß mit einem reduzierten Befehlssatz eine universell programmierbare, funktionsfähige Struktur entsteht, die eine minimale Chip-Fläche beansprucht.

Das zu einem Ring zusammengeschaltete Schieberegister läßt sich durch Select-Befehle oder feste Voreinstellungen in Partitionen einteilen, wobei die Länge der Partitionen unterschiedlich sein kann.

Diese Struktur ist in der Weise optimiert, daß nur zwei 1-Bit Arbeitsregister benutzt werden, die in Serie geschaltet sind, wobei der Wert des zweiten Arbeitsregisters den vorherigen Wert des ersten Arbeitsregisters enthält. Die ALU führt dem ersten Arbeitsregister im allgemeinen andere Werte als dem Schieberegister zu. Häufig benutzte Befehle sind 1 Bit Sequenzen. Dadurch, daß die ALU gleichzeitig verschiedene Werte an ihr Arbeitsregister und an das Schieberegister ausgibt, wird mit geringstem Aufwand eine höhere Rechenleistung bereitgestellt. Zudem kann die gewählte Partition über die ALU zu einem Ring geschlossen werden, so daß nach vollständigem Auslesen und Durchschieben sein Inhalt wiederhergestellt ist.

Die Daten der in der jeweiligen Partition gespeicherten Variablen werden über den Datenausgang am Partitionsende der ALU seriell zugeführt. Resultate durchgeführter Rechenoperationen werden im selben Schiebevorgang dem Dateneingang am Anfang der jeweiligen aktiven Partition seriell zugeführt.

Statt eines aufwendigen Adressenzählers wird ein rückgekoppeltes Schieberegister zur Generierung der Adressen für den Programmspeicher benutzt. Dadurch sind die Adreßsequenzen nicht-linear, und die folgende Adresse wird mit Hilfe der vorigen Adresse generiert.

Auf Call-Strukturen wird verzichtet, was beim Programmieren dieser Struktur beachtet werden muß. Dadurch entfallen mehrere sonst notwendige Register, wodurch sich nicht nur für die ALU, sondern auch für das Steuerwerk eine einfache Struktur ergibt. Es können jedoch bedingte Sprünge programmiert werden, wobei einzelne Programmsequenzen möglicherweise unter anderen Bedingungen mehrmals durchlaufen werden.

Das ganze System läßt sich durch Erweiterungen oder auch durch Reduzierung von Komponenten an entsprechende Anwendungen anpassen, wobei trotzdem die Verarbeitungsbreite von 1 Bit beibehalten wird. Wenn die Partitionierung fest eingestellt wird, kann auf die Partitionierlogik verzichtet werden. Durch Erweiterung des Programmspeichers läßt sich ein erweiterter Befehlsvorrat bereitstellen.

Wenn diese Struktur mit asynchroner Logik betrieben wird, läßt sich der Stromverbrauch weiter reduzieren.

Folgende Teilaufgaben, die für den Einsatz solcher Systeme erforderlich sind, werden von diesem System gelöst.
- Vergleich mit n-Bit Konstante
- Addition von Konstanten zu Variablen
- Negation der Bits eines Bytes
- Herauskopieren eines Einzelbits aus einer Bitfolge
- Setzen eines Einzelbits aus der Bitfolge auf entsprechenden Wert
- Speicherung einzelner Bits und Bitfolgen
- Schieberegister mit variabler Länge für Kodierungs-Algorithmus
- Serielle Ein- und Ausgabe von ein oder mehreren Bits
- Bedingte Sprünge
- Addition und Subtraktion von Bitfolgen
- Logikfunktion mit je 2 Bit
   Der Befehlssatz des verwendeten Design stellt einen Prozessorbefehlssatz dar, der 16 ALU Befehle umfaßt und nur zwei Arbeitsregister verwendet. Damit können mit diesem einfachen, aber leistungsfähigen Rechenwerk auch komplexe Algorithmen ausgeführt werden.
   Vorteil dieser Struktur ist die drastisch reduzierte Chipfläche, wodurch neben Platz und Material auch der Stromverbrauch reduziert wird. Mit den oben beschriebenen Anforderungen lassen sich eine Vielzahl von Anwendungen realisieren, die geringe Anforderungen an Datenbreite und Verarbeitungsgeschwindigkeit stellen. Diese universell programmierbare Struktur läßt sich auf Grund ihres Platzbedarfs einfach in Schaltungen integrieren, ohne daß ein extra Chip benötigt wird.
   Ausführungsbeispiele der Erfindung werden anhand folgender Figuren näher erläutert. Es zeigen:
   - Fig. 1: einen detaillierten Aufbau der programmierbaren Struktur.
   - Fig. 2: Aufbau des als Ring geschalteten Datenspeichers

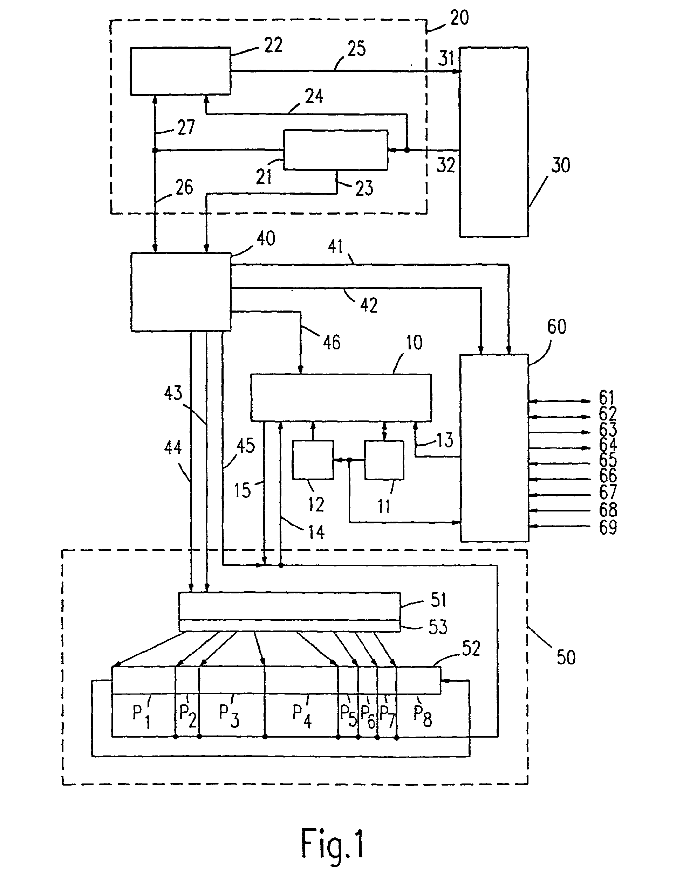

Fig. 1 zeigt einen detaillierten Aufbau der universell programmierbaren Struktur. Die Struktur umfaßt: Eine ALU 10 mit zwei 1-Bit-Arbeitsregistern 11 u. 12, eine Steuereinheit 20 mit Programmzähler 22 und Befehlsregister 21, einen Programmspeicher 30, einen seriellen Datenspeicher 50 mit Partitionierlogik 53, Selektionsregister 51 und Schieberegister 52, eine Ein/Ausgabeeinheit 60 und einen Decoder 40.

In der ALU 10 werden mit Hilfe der zwei 1-Bit-Arbeitsregister 11 und 12 zur Speicherung von 1-Bit-Operanden logische Operationen durchgeführt. Eingangssignale der ALU 10 liefern: Die Arbeitsregister 11 und 12, der Schieberegister-Ausgang 14, der Eingangsport 13 und eine Konstante 1, die in der Zeichnung nicht dargestellt ist. Ausgangssignale der ALU 10 werden zum Arbeitsregister 11 oder dem Schieberegistereingang 15 geleitet. Die ALU 10 arbeitet mit einer Operandengröße von 1 Bit und kann die logischen Basisfunktionen UND, ODER, NICHT und EXOR ausführen, wobei die einzelnen Eingangssignale miteinander entsprechend verknüpft werden. Die ALU 10 benutzt die 1-Bit-Arbeitsregister 11 und 12, welche aus jeweils einem Flip-Flop bestehen und in Serie geschaltet sind. Diese Arbeitsregister 11 und 12 enthalten ein oder zwei Operanden für die Basisfunktionen. Ein weiterer Operand kann direkt aus dem Datenspeicher 50 gelesen werden. Das Ergebnis solcher Funktionen wird von der ALU 10 zum Arbeitsregister 11 übergeben oder alternativ zum Datenspeicher 50. Das zweite Arbeitsregister 12 wird nicht explizit als Arbeitsregister adressiert, es beinhaltet jeweils den vorherigen Wert vom Arbeitsregister 11. Dadurch wird ein Extra-Adreß-Bit im Befehlscode vermieden. Die wichtigsten n-Bit-Operationen der ALU sind als 1-Bit-Befehlssequenzen realisiert, wobei der Operand jeweils vom Schieberegister 52 des Datenspeichers 50 geladen wird und dieses gleichzeitig geschoben wird. An das Arbeitsregister 11 werden allgemein andere Werte weitergegeben als an das Schieberegister 52.

Die Steuereinheit 20 besteht aus Programmzähler 22 und dem Befehlsregister 21. Der Programmzähler 22 ist als rückgekoppeltes-Schieberegister realisiert und generiert die Adresse für den im Programm folgenden Befehl aus der jeweils aktuellen Adresse. Die Adreß-Sequenz, die auf diesem Weg erhalten wird, ist nicht-linear. Bei sequentiellen Zugriffen generiert die Schiebeoperation des Programmzählers 30 die jeweils nächste Adresse. Bei Sprungbefehlen dienen als Eingänge für diesen Programmzähler 22 die ersten fünf Bits des vorherigen Befehls auf Leitung 27 und die 6 Bits des aktuellen Befehls auf Leitung 24.
Daraus generiert der Programmzähler 22 die neue Adresse, die dann aus 11 Bit besteht und über die Leitung 25 an den Adresseingang 31 des Programmspeichers 30 übergeben wird. Von der so ausgewählten Adresse ab werden danach die weiteren Befehle gelesen, die dem Befehlsregister 21 übergeben und im nächsten Zyklus abgearbeitet werden. Der Programmspeicher 30 hat in diesem Ausführungsbeispiel eine Speicherkapazität von 2k, wobei die Wortbreite 6 Bit ist. Die Bitfolge des aktuellen Befehls, aus 6 Bits bestehend, wird an den Decoder 40 weitergeleitet.

Der Decoder 40 dient zur Dekodierung der Befehle. Er besteht aus einer kombinatorischen Schaltung, die Signale generiert, die zur Aktivierung von Signalpfaden 41-46 erforderlich sind. Als Eingangssignale erhält er die 6 Bit des Befehlsregisters über Leitung 26 und gegebenenfalls das Signal 23 für Zwei-Wort-Befehle. Der Decoder 40 aktiviert mit den Leitungen 41 und 42 die einzelnen externen Eingangs- oder die Ausgangsleitungen und aktiviert das Selektionsregister 51 mit dem Select-Signal 44 zum Auslesen von im Datenspeicher 50 abgelegten Variablen zu deren Verarbeitung in der ALU 10. Der Zustand der Partition wird mit dem Signal 43, welches 8 Bit breit ist, zum Selektionsregister 51 übertragen. Über die Leitung 46 wird die Operation ausgewählt, die die ALU ausführen soll und die im Decoder 40 aus dem Befehlscode abgeleitet wird.

Der serielle Datenspeicher 50 enthält neben dem Schieberegister 52 das Selektionsregister 51, wobei in diesem auch die Partitionierlogik 53 enthalten ist. Das Schieberegister 52 ist hier in 8 Partitionen Pᵢ geteilt und zu einem Ring geschaltet. Da der Datenspeicher 50 nur acht Adressen für die acht Partitionen P_{1....}P₈ benötigt, kann dieser mit 3 Bit adressiert werden. Das 8-Bit-Selektionsregister 51 enthält den Zustand der korrespondierenden Partitionsgrenzen. Die Grenze zwischen zwei Partitionen Pᵢ wird durch einen Select-Befehl aktiviert. Wenn eine Grenze zwischen zwei Partitionen passiv ist, verhalten sich diese zwei einzelnen Partitionen wie eine Partition. Die Partitionierung wird mit den ersten Select-Befehlen nach einem Reset durchgeführt. Die Partitionen des Schieberegisters 52 haben dann eine feste Länge, sind aber allgemein unterschiedlich lang. Die Länge der Partitionen ist so gewählt, daß z.B. für bestimmte Variablen kurze Partitionen vorgesehen sind und für Verschlüsselungsvorgänge längere Partitionen verwendet werden. Durch einen Select-Befehl wird die aktuelle Partition Pᵢ des Schieberegisters 52 gewählt, von der nachfolgend durch eine Reihe von ALU-Befehlen Daten herausgeschoben und über die Leitung 14 der ALU zur Verarbeitung zugeführt werden können. Die Verarbeitungsergebnisse der ALU 10 werden über den Schieberegistereingang 15 der aktiven Partition Pᵢ des Schieberegisters wieder zugeführt. Die Verarbeitungsergebnisse der ALU liegen parallel an den Serial-In-Positionen aller Partitionen, aber nur die selektierte Partition übernimmt diese Daten. Dadurch wird auf die Daten seriell zugegriffen, und auch deren Verarbeitung erfolgt seriell. Die Adressierung des Datenspeichers 50 wird durch einen Select-Befehl erreicht und geht der ALU-Operation voraus. Da für mehrere aufeinanderfolgende ALU-Operationen meist die gleiche Partition benutzt wird, bleibt der Overhead entsprechend klein.

In der Ein-/Ausgabeeinheit 60 werden folgende Funktionen realisiert
- Selektion von einem von vier möglichen Eingangsports 62, 65-67, Eingangsport 0 ist der mit 62 bezeichnete Port, die weiteren Eingangsports 1 2 und 3 sind die mit 65-67 bezeichneten Ports
- Selektion von einem von vier Ausgangsports 61-64, Ausgangsport 0 ist der mit 61 bezeichnete Port, Ausgangsport 1 der mit 62 bezeichnete Port, 63 und 64 sind die weiteren Ausgangsports 3 und 4
- Synchronisation des Eingangsports 62 mit einem externen SCLK Signal 61
- Generation des taktsynchronen Reset-Signals mit dem Signal 68
- Generation eines internen Taktsignals CLK aus einem extra Takteingang PCLK 69.

Die Leitungen 61 und 62 sind dabei bidirektional betreibbar. Über die vom Decoder 40 aktivierten Leitungen 41 und 42 wird einer von vier möglichen Eingängen 62, 65-67 ausgewählt und über die Leitung 13 zur ALU 10 weitergeleitet. Auf einen Interruptmechanismus zur Synchronisation mit externen Ereignissen wurde verzichtet. Dafür wird bei externen Ereignissen wenigstens eine Eingangsleitung mit dem Takt synchronisiert. Bei einem Dateneingang auf einer dieser Eingangsleitungen wird interne Takt unterdrückt, bis die nächste Taktflanke des externen Takts beginnt. Die SCLK-Leitung 61 liefert einen externen Takt. Wenn am SCLK-Eingang 61 kein Signal anliegt, wird der Prozessor gestoppt. Der interne Takt wird aus dem PCLK-Takt 69 generiert. An die Ausgangsports 61-64 werden ALU-Ergebnisse ausgegeben, die im Arbeitsregister 11 zwischengespeichert sind.

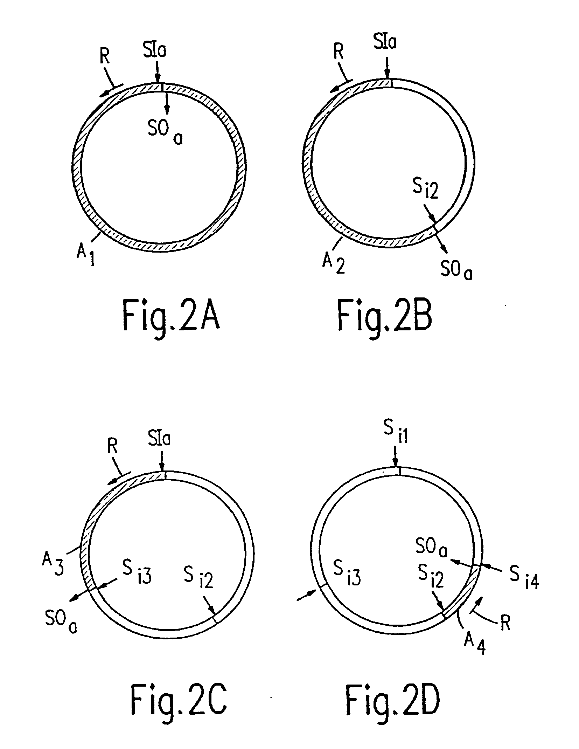

In den Fig. 2A-D ist das zu einem Ring geschaltete Schieberegister (50/Fig.1) dargestellt. Es werden die Serial-In-Position (SI) und die Serial-Out-Position (SO) gezeigt.
Die in einer entsprechenden Partition stehende, zu bearbeitende Variable wird ausgewählt und aus dieser Partition des Schieberegisters herausgeschoben, ohne daß die restlichen Partitionen des Schieberegisters verschoben oder verändert werden. Der Datenspeicher 50 arbeitet mit inhärenten Adressen, d.h. es wird nicht bei jeder Operation die Variablenadresse angegeben, sondern die zu bearbeitende Variable wird einmal durch die Selektion der aktiven Partition eingestellt und gilt dann inhärent so lange, bis sie verändert wird.

Vor dem ersten Select-Befehl ist keine Dateneingabe in den Datenspeicher möglich. Durch die ersten Select-Befehle nach einem Reset werden die Partitionsgrenzen und die entsprechenden Serial-In-Positionen und Serial-Out-Positionen bestimmt. Der erste Select-Befehl trennt das als Ring zusammengeschaltete Schieberegister an einer ersten Serial-In-Position auf. Die erste Partition ist damit entstanden. Da eine Partition immer von der durch den Select-Befehl ausgewählten Serial-In-Position bis zur nächsten Serial-In-Position geht und der Ring bisher nur eine ausgewählte Serial-In-Position aufweist, ist die erste Partition das komplette Schieberegister. Hier sind, im Gegensatz zum unpartitionierten Schieberegister, jedoch Eingang (Serial-In-) und Ausgangsposition (Serial-Out) der Partition festgelegt. Diese erste Serial-In-Position wird, wie alle folgenden, in Speicherzellen im Selektionsregister gespeichert. Die Serial-Out- und Serial-In-Positionen bleiben bis zum nächsten Select-Befehl aktiv. Mit dem nächsten Select-Befehl wird eine weitere Serial-In-Position im Schieberegister ausgewählt, die dann auch gespeichert wird. Der Bereich des Schieberegisters, der vor der eben ausgewählten Serial-In-Position liegt, entgegengesetzt zur Schieberichtung R, stellt die nächste Partition dar. Diese Partition reicht von der Serial-Out-Position bis zur nächsten Serial-In-Position, in entgegengesetzer Schieberichtung. Mit der Speicherung der Serial-In-Positionen sind auch die Partitionsgrenzen festgesetzt. Mit jedem weiteren Select-Befehl wird eine Partition des Schieberegisters ausgewählt und aktiviert, die von der aktiven Serial-In-Position bis zur aktiven Serial-Out-Position reicht. Die aktive Serial-In-Position ist die Position, die am dichtesten vor der aktiven Serial-Out-Position, entgegengesetzt der Schieberichtung R gesehen, liegt.

Der Select-Befehl erfüllt zwei Funktionen. Mit dem ersten Select-Befehl nach einem Reset wird die Partitionierung vorgenommen. Nach der Partitionierung werden mit dem Select-Befehl die gewählten Partitionen aktiviert.

In den Figuren 2A-2D sind jeweils die aktive Partition Aₙ und die aktiven Serial-In- SIₐ und Out-Positionen SOₐ dargestellt. Die mit Sᵢₙ gekennzeichneten Positionen stellen die gespeicherten Serial-In-Positionen der Partitionen dar.

Fig. 2A zeigt das Schieberegister nach dem ersten Select-Befehl, wobei hier das komplette Schieberegister als aktive Partition A₁ ausgewählt wurde. An der aktiven Serial-Out-Position SOₐ werden die Daten aus dem Schieberegister herausgeschoben und an der aktiven Serial-In-Position SIₐ wieder neue Daten in diese Partition A₁ hineingeschoben.

Fig. 2B zeigt das Schieberegister nach einem zweiten Select-Befehl, wobei in diesem Fall die aktivierte Partition A₂ nicht so lang ist wie die Partition A₁ im ersten Fall. Durch den zweiten Select-Befehl ist als aktive Serial-In-Position SIₐ die gleiche wie in Fig. 2A festgelegt, die aktive Serial-Out-Position SOₐ ist jedoch eine andere. Dadurch wird eine zweite Serial-In-Position Sᵢ₂ festgelegt, die im Gegensatz zu den Serial-Out-Positionen bis zum nächsten Reset gespeichert wird.

Fig. 2C zeigt eine durch einen dritten Select-Befehl aktivierte Partition A₃. Gleichzeitig wird deutlich, daß die weitere Serial-In-Position Sᵢ₃ neben der Sᵢ₂ gespeichert wurde.

Fig. 2D stellt eine aktivierte Partition A₄ dar, die an der Serial-In-Position Sᵢ₂ des zweiten Select-Befehls beginnt. Nach dieser Aktivierung wird die Sᵢ₄ gespeichert, die hinter der aktiven Serial-Out-Position SOₐ liegt. Die einzelnen Bits werden entgegen der Uhrzeigerrichtung aus der aktivierten Partition Aₙ herausgeschoben.

In diese Anordnung sind keine Call-Strukturen implementiert, somit konnte auf einen Return-Stack und ein Linkregister verzichtet werden. Befehlssequenzen, die wiederholt abgearbeitet werden, werden nicht, wie sonst üblich, als Unterprogramm aufgerufen, und es wird nach Abarbeitung nicht zum Ausgangspunkt zurückgekehrt. Unterprogrammaufrufe können aber emuliert werden, indem man vor dem Sprung in die Routine Statusinformationen in ein Datenregister schreibt und am Ende der Routine diese Information nutzt, um hinter den Sprungbefehl zu verzweigen. Bedingte Sprünge sind in Abhängigkeit vom Zustand des Arbeitsregisters 11 durchführbar. Für diese Sprünge werden Zwei-Wort-Befehle verwendet, die eine absolute Zieladresse enthalten. Der erste Teil der Adresse wird im Befehlsregister 21 zwischengespeichert, und mit dem Signal 23 wird ein Zwei-Wort-Befehl angezeigt. Bei diesen Sprüngen werden die Inhalte der beiden Arbeitsregister 11 und 12 ausgetauscht.

Der Programmspeicher 30 ist ein ROM, der in diesem Ausführungsbeispiel 2k x 6 Bit Breite enthält. Optional kann die Breite auf 7 Bit erweitert werden. Die Kapazität ist anwendungsabhängig. Bei Erweiterung der Wort-Breite auf 7 Bit wird ein größerer Befehlsvorrat möglich, ebenso wird der Adreßraum ausgeweitet. Mit der Vergrößerung der Wortbreite kann auch der Programmspeicher auf bis zu 8k vergrößert werden, womit sich der Speicherplatzbedarf und damit die beanspruchte Größe auf dem Chip an die Anwendung anpassen läßt.

Der Datenspeicher 50, der als Schieberegister 52 ausgeführt ist, kann mit festeingestellten Partitionen betrieben werden, womit die Partitionierlogik verkleinert würde. Bei Verwendung von 7 Bit breiten Befehlen sind auch zusätzliche Register denkbar.

## Patentansprüche

1. Programmierbare Datenverarbeitungsanordnung mit auf einer 1-Bit Verarbeitungsstruktur basierenden ALU (10) und
einem Datenspeicher (50), der als ringförmig geschaltetes Schieberegister (52) mit einer Wortbreite von 1 Bit realisiert ist, wobei Daten seriell aus Datenausgängen durch unidirektionale Schiebevorgänge der ALU (10) zuführbar sind und die ALU (10) Daten seriell über einen gemeinsamen Dateneingang dem Schieberegister zuführt, wobei das Schieberegister (52) partitionierbar ist und
eine durch ein Select-Befehl einmal ausgewählte aktive Partition so lange aktiv ist, bis ein weiterer Select-Befehl eine andere Partition aktiviert **dadurch gekennzeichnet daß** Daten vom Datenausgang (SOₐ) am Partitionsende der aktiven Partition der ALU (10) zuführbar sind und Daten von der ALU zum Dateneingang (SIₐ) der aktiven Partition am Partitionsanfang zuführbar sind, ohne daß die restlichen Partitionen des Schieberegisters (52) verschoben oder verändert werden.

2. Programmierbare Datenverarbeitungsanordnung nach Anspruch 1, **dadurch gekennzeichnet, daß** der ALU (10) zwei in Serie geschaltete 1 Bit Arbeitsregister (11) und (12) zugeordnet sind und das zweite Arbeitsregister (12) den vorherigen Wert des ersten Arbeitsregisters (11) enthält und die ALU (10) dem ersten Arbeitsregister (11) und dem Schieberegister (52) unabhängig voneinander Werte zuführt.

3. Programmierbare Datenverarbeitungsanordnung nach Anspruch 1, **dadurch gekennzeichnet, daß** das Schieberegister (52) mit Befehlen in unterschiedlich lange Partitionen (Pᵢ) teilbar ist.

4. Programmierbare Datenverarbeitungsanordnung nach Anspruch 1, **dadurch gekennzeichnet, daß** eine Steuereinheit (20) einen als rückgekoppeltes-Schieberegister realisierten Programmzähler (22) zur Bildung der Adressen der Befehle im Programmspeicher (30) benutzt, der aus der Bitfolge des aktuellen Befehls die folgende Adresse für den nächsten Befehl generiert.

5. Programmierbare Datenverarbeitungsanordnung nach Anspruch 1, **dadurch gekennzeichnet, daß** nur ausschließlich vom Zustand des ersten 1 Bit Arbeitsregisters (11) abhängige bedingte Sprünge ausführbar sind und diese Sprung-Befehle als Zwei-Wort Befehl realisiert sind.

6. Programmierbare Datenverarbeitungsanordnung nach einem der Ansprüche 1 bis 5, **dadurch gekennzeichnet, daß** die gesamte Anordnung in asynchroner Logik realisiert ist.

7. Datenträger mit einer Datenverarbeitungsanordnung nach einem der Anprüche 1 bis 6.

8. Lesegerät mit einer Datenverarbeitungsanordnung nach einem der Ansprüche 1 bis 6.

## Claims

1. A programmable data processing arrangement which includes an ALU (10) which is based on a 1-bit processing structure and a data memory (50) which is realized as an end-around shift register (52) having a word width of 1 bit, wherein data can be serially applied from data outputs to the ALU (10) via unidirectional shift operations and the ALU (10) applies data serially to the shift register via a common data input, in which the shift register (52) can be partitioned, and an active partition, once selected by a selection instruction, remains active until a further selection instruction activates another partition, **characterized in that** data can be applied to the ALU (10) from the data output (SOₐ) at the end of the partition and data can be applied from the ALU to the data input (SIₐ) of the active partition at the beginning of the partition, without the remaining partitions of the shift register being shifted or changed.

2. A programmable data processing arrangement as claimed in claim 1, **characterized in that** with the ALU (10) there are associated two series-connected 1-bit working registers (11) and (12) and the second working register (12) contains the previous value of the first working register (11), and that the ALU (10) supplies the first working register (11) and the shift register (52) with values independently of one another.

3. A programmable data processing arrangement as claimed in claim 1, **characterized in that** the shift register (52) can be sub-divided into partitions (Pᵢ) of different length by means of instructions.

4. A programmable data processing arrangement as claimed in claim 1, **characterized in that** a control unit (20) utilizes a program counter (22), constructed as an end-around shift register, in order to form the addresses of the instructions in the program memory (30) which generates the next address for the next instructions from the bit sequence of the current instruction.

5. A programmable data processing arrangement as claimed in claim 1, **characterized in that** only conditional jumps which are dependent exclusively on the state of the first 1-bit working register (11) can be performed, and that these jump instructions are realized as two-word instructions.

6. A programmable data processing arrangement as claimed in any one of the claims 1 to 5, **characterized in that** the overall arrangement is realized in asynchronous logic.

7. A data carrier with a data processing arrangement as claimed in any one of the claims 1 to 6.

8. A reading apparatus with a data processing arrangement as claimed in any one of the claims 1 to 6.

## Revendications

1. Dispositif de traitement de données programmable doté d'une UAL (10) reposant sur une structure de traitement à un bit, et d'une mémoire de données (50) qui est réalisée comme registre à décalage (52) monté en anneau avec une largeur de mot de un bit, les données pouvant être transmises de façon sérielle à l'UAL (10) depuis des sorties de données par l'intermédiaire d'opérations de décalage unidirectionnelles et l'UAL (10) transmettant les données de façon sérielle au registre à décalage par l'intermédiaire d'une entrée de données commune, le registre à décalage (52) pouvant être partitionné et une partition active sélectionnée une fois par l'intermédiaire d'une instruction de sélection étant active jusqu'à ce qu'une autre instruction de sélection active une autre partition, **caractérisé en ce que** des données peuvent être transmises à l'UAL (10) depuis la sortie de données (SOₐ) à la fin de partition de la partition active, et des données peuvent être transmises de l'UAL à l'entrée de données (SIₐ) de la partition active au début de partition, sans décaler ou modifier les partitions restantes du registre à décalage (52).

2. Dispositif de traitement de données programmable selon la revendication 1, **caractérisé en ce que** deux registres de travail (11) et (12) à un bit, montés en série, sont attribués à l'UAL (10) et le second registre de travail (12) contient la valeur précédente du premier registre de travail (11), et l'UAL (10) transmet des valeurs indépendantes les unes des autres au premier registre de travail (11) et au registre à décalage (52).

3. Dispositif de traitement de données selon la revendication 1, **caractérisé en ce que** le registre à décalage (52) est divisible avec des instructions en partitions (Pᵢ) de différente longueur.

4. Dispositif de traitement de données programmable selon la revendication 1, **caractérisé en ce qu'**une unité de commande (20) utilise un compteur de programme (22) conçu comme registre à décalage à boucle fermée en vue de former les adresses des instructions dans la mémoire de programme (30), laquelle génère à partir de la séquence de bits de l'instruction actuelle l'adresse suivante pour la prochaine instruction.

5. Dispositif de traitement de données programmable selon la revendication 1, **caractérisé en ce que** seuls des sauts conditionnels dépendant de l'état du premier registre de travail (11) à un bit sont exécutables et ces instructions de saut sont réalisées comme instructions à deux mots.

6. Dispositif de traitement de données programmable selon l'une quelconque des revendications 1 à 5, **caractérisé en ce que** le dispositif dans son ensemble est réalisé dans une logique asynchrone.

7. Support de données doté d'un dispositif de traitement de données selon l'une quelconque des revendications 1 à 6.

8. Lecteur muni d'un dispositif de traitement de données selon l'une quelconque des revendications 1 à 6.
